# EUROPEAN PATENT APPLICATION

(11) **EP 3 135 613 A1**
(43) Date of publication of application: **01.03.2017**
(21) Application number: 15182094.1
(22) Date of filing: 24.08.2015
(51) Int. Cl.: B65G 47/08, B25J 9/00, B65G 47/28, B65G 15/14, B65G 47/31

(54) **A SEQUENCING APPARATUS**

(71) Applicant: Tetra Laval Holdings & Finance S.A., 1009 Pully (CH)
(72) Inventor: MORSELLI, Alessandro, 41013 Castelfranco Emilia (IT); COULOMB, Mathias N, Greenville, South Carolina 29615 (US); WILLIAMS, Brian, Simpsonville, South Carolina 29681 (US); MILOSEVIC, Slobodan, Schaumburg, Illinois 60194 (US); LASKIS, Jon Paul, Simpsonville, South Carolina 29681 (US); DAVIDSON, Mark W, Greer, South Carolina 29651 (US)
(74) Representative: Tetra Pak - Patent Attorneys SE

(57) **Abstract**

A sequencing apparatus for arranging a plurality of products (C) in a sequence, comprises:
- a plurality of handling devices (10, 10'), each handling device (10, 10') being operable between an engagement configuration, in which the handling device (10, 10') is engaged with a product (C), and a disengagement configuration, in which the handling device (10, 10') releases the product (C),
- a plurality of driving devices (14) for advancing the handling devices (10, 10') along an advancement direction (F).

The plurality of handling devices (10, 10') comprises at least a group of consecutive handling devices (10) each of which is configured to be driven by a respective driving device (14) of said plurality, so that movement of a handling device (10) of said group along the advancement direction (F) can be controlled independently of movement of the other handling devices (10) of said group, in order to ensure that a preset pitch is defined between consecutive products (C) of said sequence.

## Description

The invention relates to a sequencing apparatus for arranging a plurality of products in a sequence, so that a predetermined pitch is defined between two consecutive products of the sequence.

The sequencing apparatus according to the invention is especially intended to be used in the packaging field, in which case the sequencing apparatus is configured to process containers.

The containers that can be processed by the sequencing apparatus of the invention may in particular be made of multilayer, plastic- and/or paper based, laminated materials. However, the sequencing apparatus of the invention can be used for processing any kind of containers, such as glass or plastic bottles, moulded or thermoformed containers, sheet metal or aluminium containers. Furthermore, the sequencing apparatus according to the invention may process either single containers or groups formed by two, three or more containers. The containers at issue are mainly used in the food or drink industry.

More in particular, the sequencing apparatus according to the invention is intended to be located downstream of a filling machine, so as to act on containers which have already been formed, filled and sealed. Furthermore, the sequencing apparatus according to the invention is intended to be located upstream of conveying systems and packaging machines such as cartoning machines, film wrapping machines or palletizers, which form and/or pack groups of containers to make them ready for distribution.

In the packaging field, it is well known that the equipment which is located downstream of a filling machine needs to be fed with a sequence of containers having a preset pitch.

Sequencing devices are known which are capable of ensuring that a substantially constant pitch is achieved in a sequence of containers exiting the device. These sequencing devices, which are also known as "belt brakes", comprise a plurality of modules, each of which includes a lower conveyor belt and two side belts. A bottom face of each container rests on the lower conveyor belt, which moves along an advancement direction. Each of the two side belts engages with a respective side face of a container. The side faces of a container that engage with the side belts may be opposite to one another and parallel to the advancement direction.

By combining two or more modules, each of which has a properly selected speed of the belts, it is possible to ensure that the containers exiting the last module are regularly spaced apart from one another, i.e. have a pitch which is constant, within a certain tolerance. Although the known sequencing devices provide satisfactory performances in most applications, there are cases in which they are not capable of ensuring that the tolerance on the pitch at the exit of the last module is sufficiently narrow. It may in particular happen that, when the speed of the packaging line - and hence productivity thereof - is increased above a certain threshold, the equipment located downstream of the known sequencing devices cannot work properly, because such equipment receives containers arranged at a distance which is not sufficiently regular.

This can be due to slippage occurring between the containers and the belts of the known sequencing devices when speed overcomes a limit value, so that a sufficient precision in position of the container cannot be anymore obtained.

An object of the invention is to improve the equipment for processing products, especially containers or groups of containers, particularly after the containers have been formed, filled and sealed.

A further object is to increase productivity of the packaging lines for producing packaging products, particularly containers or groups of containers.

Another object is to provide a device capable of improving precision in positioning products along a packaging line.

A further object is to provide a device capable of arranging a plurality of products in a sequence, with a pitch that can be considered as constant within a narrow tolerance.

According to the invention, there is provided a sequencing apparatus for arranging a plurality of products in a sequence, the sequencing apparatus comprising:
- a plurality of handling devices, each handling device being operable between an engagement configuration, in which the handling device is engaged with a product, and a disengagement configuration, in which the handling device releases the product,
- a plurality of driving devices for advancing the handling devices along an advancement direction,
wherein said plurality of handling devices comprises at least a group of consecutive handling devices each of which is configured to be driven by a respective driving device of said plurality, so that movement of a handling device of said group along the advancement direction can be controlled independently of movement of the other handling devices of said group, in order to ensure that a preset pitch is defined between consecutive products of said sequence.

Owing to the invention, at an outlet of the sequencing apparatus, the products can be precisely positioned along the advancement direction, regardless of the position of the products at an inlet of the sequencing apparatus. Each driving device may displace the corresponding handling device according to a speed profile which is different from the speed profile of the other handling devices. When the handling device releases a product, the latter can therefore be positioned at a constant pitch relative to the adjacent products.

The sequencing apparatus according to the invention can thus work in combination, and upstream, of conveying systems, packaging machines or other equipment, even if these systems, machines or equipment need to receive, at an input zone thereof, regularly spaced products, particularly containers, the position of which deviates by extremely narrow tolerances from a theoretical position.

Since each product is collected and released by a corresponding handling device, which in turn is driven by a respective driving device, the sequencing apparatus according to the invention works reliably even at high speed. The sequencing apparatus according to the invention can therefore be successfully used also in production plants in which productivity is significantly high.

In an embodiment, each driving device comprises a driving motor and at least one endless flexible element configured to be driven by the corresponding driving motor, the at least one endless flexible element being arranged for supporting a handling device.

It is thus possible to move the handling devices in a simple and reliable manner.

The invention will be better understood and carried out with reference to the attached drawings, which show an exemplifying and non-limiting embodiment thereof, in which:
Figure 1 is a perspective view showing a sequencing apparatus for arranging a plurality of products in a sequence;
Figure 2 is a plan view of the sequencing apparatus of

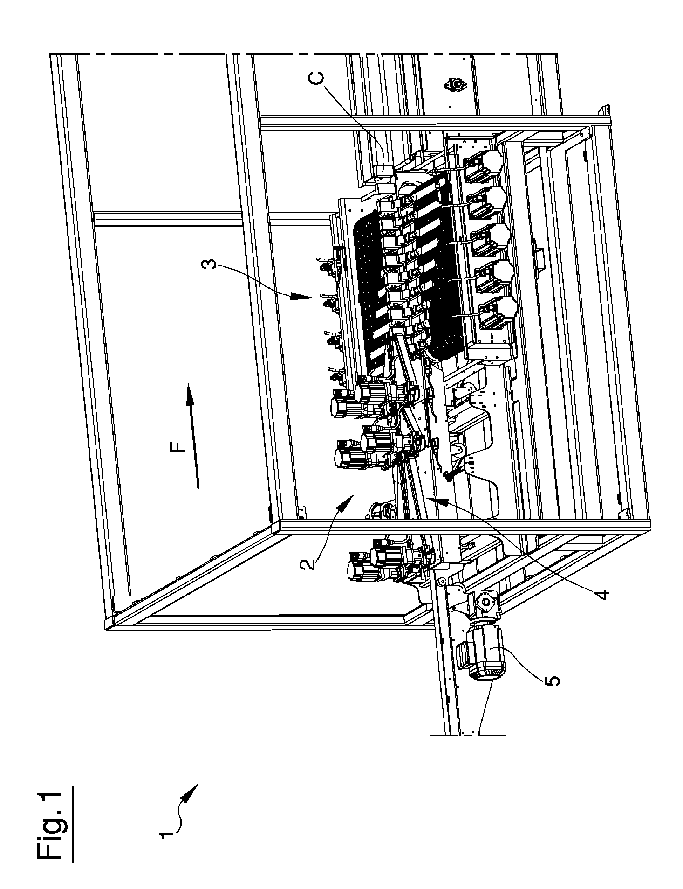

Figure 1, in which some parts have been removed for the sake of clarity;

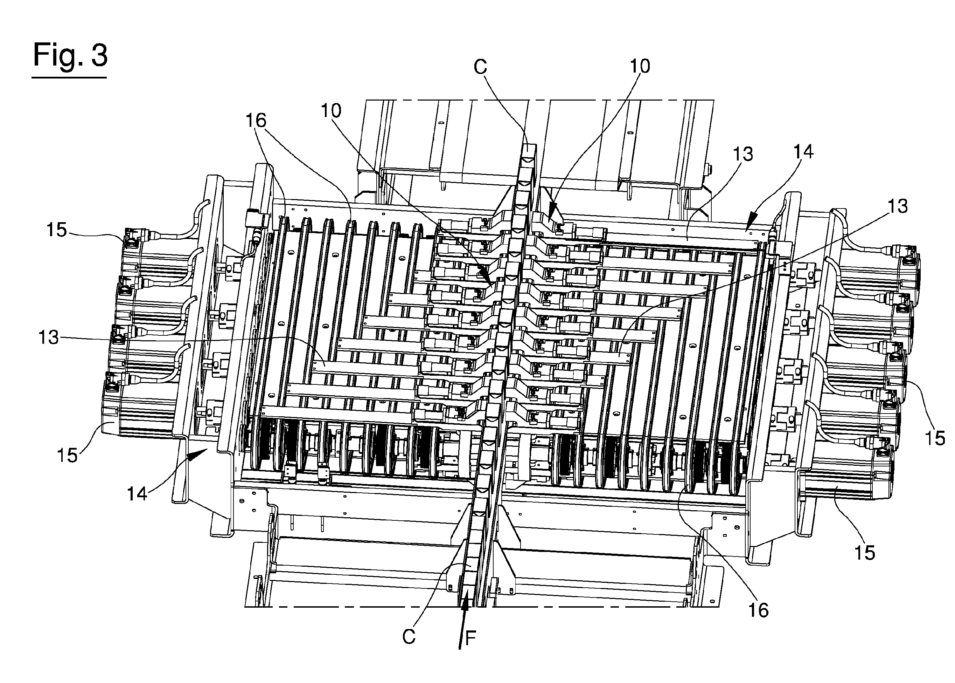

Figure 3 is an enlarged perspective view, showing a portion of the sequencing apparatus of Figure 1;

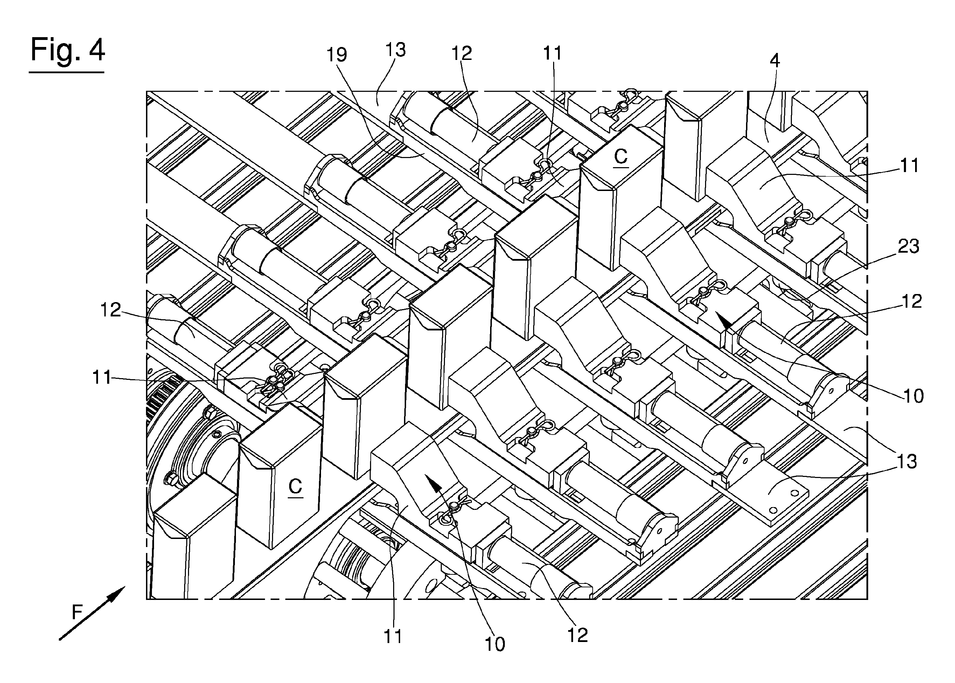

Figure 4 is an enlarged perspective view, showing some handling devices of the sequencing apparatus of Figure 1;

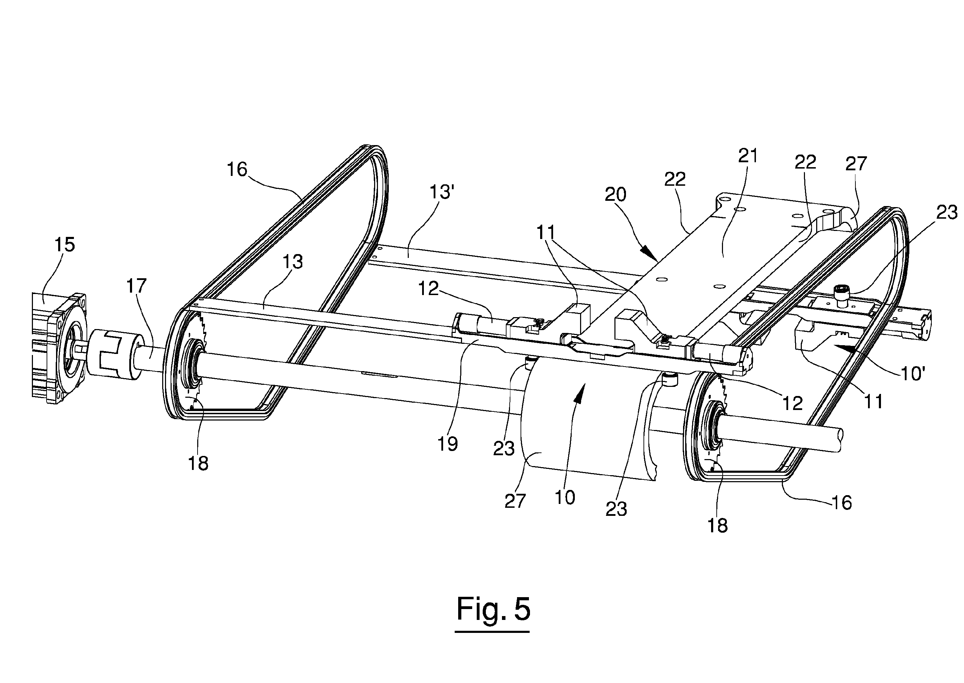

Figure 5 is a schematic perspective view, in which some parts have been removed for the sake of clarity, showing how a handling device is driven;

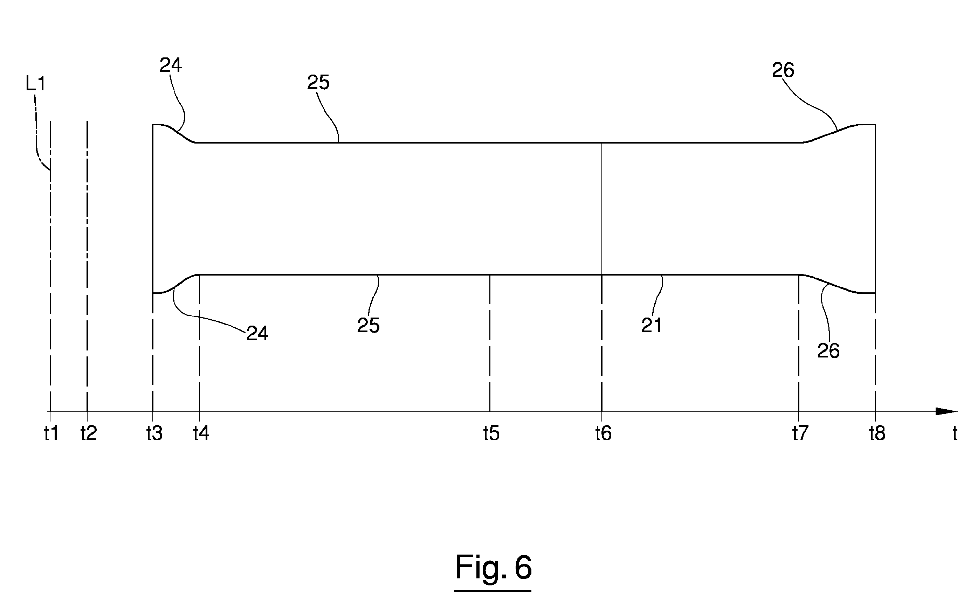

Figure 6 is a schematic view, showing a time sequence of events during operation of a handling device.

Figure 1 shows a sequencing apparatus 1 for arranging a plurality of products, particularly containers C, in a sequence. In the example shown, the containers C are made of a multilayer, plastic- and/or paper based, laminated material. Other types of materials could nevertheless be used for the containers C.

The sequencing apparatus 1 may be included in a packaging plant in which the containers C advance along an advancement direction F. In particular, upstream of the sequencing apparatus 1, a filling machine (which is not shown) can be provided. The filling machine has the function of forming, filling and sealing the containers C, so that the containers C exiting the filling machine are closed. A cap applicator can be interposed between the filling machine and the sequencing apparatus 1 in order to apply on each container C a cap that the consumer may use to re-close the container C after the latter has been opened for the first time.

Downstream of the sequencing apparatus 1, a dividing apparatus (which is not shown) can be provided, intended to divide the sequence of containers C coming from the sequencing apparatus 1 into a plurality of parallel lanes, so as to form groups of containers C.

A wrapping machine can be located downstream of the dividing apparatus, in order to wrap each group of containers C with a heat shrinkable film, and to heat the film arranged around the group of containers C so that such film wraps tightly the group of containers C. In an alternative embodiment, the sequencing apparatus 1 may be arranged downstream of a wrapping machine, so that the sequencing apparatus 1 processes groups of containers C already wrapped by a film. A dividing apparatus can be provided downstream of the sequencing apparatus 1, in order to divide the groups of containers C into parallel lanes. A number of groups of containers C will then be grouped together, and subsequently packaged into cartons by a cartoning machine arranged downstream of the dividing apparatus.

The sequencing apparatus 1 comprises an introductory portion 2 and a sequencing portion 3 arranged downstream of the introductory portion 2. The sequencing portion 3 is configured to arrange the containers C into a sequence with a predetermined, substantially constant, pitch. Furthermore, the sequencing portion 3 may also process the containers C in such a way that the containers C exiting the sequencing apparatus 1 have a substantially constant speed.

The introductory portion 2 exerts a preliminary sequencing action on the containers C, which have a random pitch and/or speed upstream of the sequencing apparatus 1. The sequencing portion 3 is more precise in sequencing than the introductory portion 2, and positions the containers C with an accuracy that allows the downstream equipment - and particularly the dividing apparatus - to work properly even at high speeds.

In an embodiment which is not shown, the introductory portion 2 might be absent or have a conformation different from that shown in the drawings.

The sequencing apparatus 1 is provided with a transport plane 4, on which the containers C advance along a path throughout the introductory portion 2 and the sequencing portion 3.

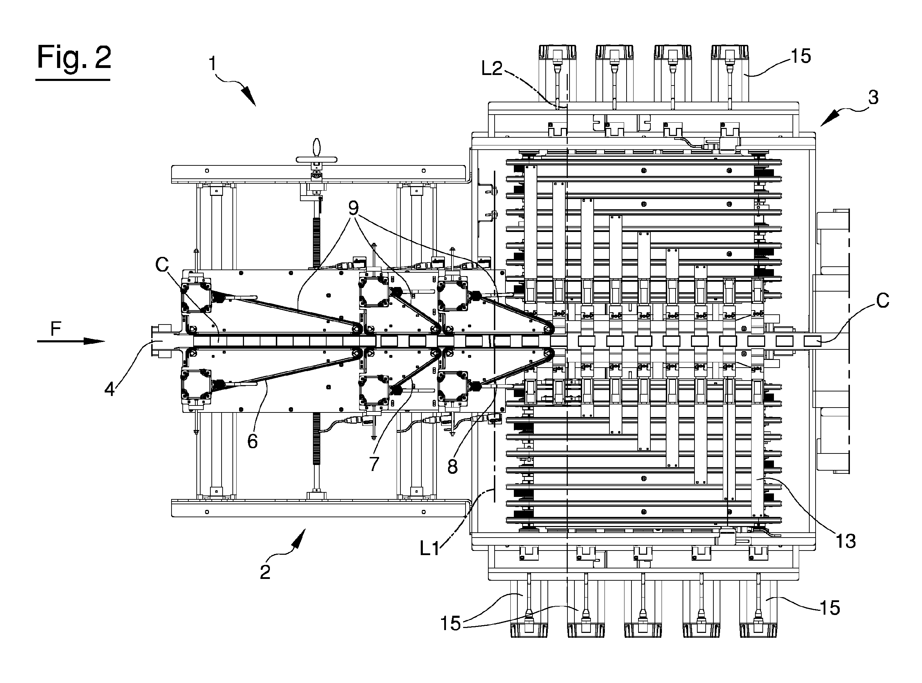

The transport plane 4 may be movable along the advancement direction F. In particular, the transport plane 4 may be defined by the upper branch of a conveying belt driven by a motor 5, shown in Figure 1. The introductory portion 2 may comprise a plurality of modules, having functions and working parameters which differ from one another. In the example shown in Figure 2, the introductory portion 2 comprises three modules, namely an inlet module 6, an intermediate module 7 and an outlet module 8. Nevertheless, the introductory portion 2 may comprise a number of modules other than three. For example, the introductory portion 2 may comprise two or more intermediate modules interposed between the inlet module and the outlet module.

Each module 6, 7, 8 comprises a couple of belts 9. Each belt 9 runs along a path which, in the embodiment shown, has a substantially triangular shape in plan view. Each belt 9 has an active portion which is parallel to the advancement direction F. The active portions of the belts 9 belonging to the same module face one another and are arranged on parallel planes, so as to engage with opposite side faces of a container C and advance the latter along the advancement direction F.

The inlet module 6 is configured to decrease speed of the containers C so that a series of containers C in contact with one another, or nearly in contact with one another, is formed between the corresponding belts 9. The intermediate module 7 and the outlet module 8 are configured to increase speed of the containers C, so as to space the containers C and place the containers C at a desired distance from one another.

When leaving the outlet module 8, the containers C are therefore arranged in a sequence at a pitch which roughly corresponds to a desired value, although not always complying with the narrow tolerances required by the machines arranged downstream of the sequencing apparatus 1, especially at high production rates.

In order to ensure that also such narrow tolerances are met, the sequencing portion 3 is provided downstream of the introductory portion 2.

The sequencing portion 3 comprises a plurality of handling devices 10 each of which is capable of engaging with a container C in order to transport the latter along the advancement direction F, and subsequently release the container C.

As shown in Figure 4, each handling device 10 can comprise a pair of gripping elements 11 movable between an engagement configuration and a disengagement configuration. In the engagement configuration, a container C is clamped between the gripping elements 11 so that the container C can be displaced along the advancement direction F while the gripping elements move along such direction. In particular, in the engagement configuration the gripping elements 11 are in contact with opposite side faces of a container C. In the example shown, said faces are flat and substantially parallel to the advancement direction F. However, the containers C may have also other shapes. For example, the containers C may be delimited by non-flat surfaces. In this case, the gripping elements 11 will be conformed accordingly.

In the disengagement configuration, the gripping elements 11 release the container C by moving away from one another and thus detaching from the side faces of the container C with which they were previously engaged. The container C may therefore be brought away from the sequencing apparatus 1 by gripping devices which are not shown.

In an alternative embodiment, which is not shown, the handling devices 10 may comprise handling elements different from the gripping elements 11.

The sequencing apparatus 1 further comprises a plurality of driving devices 14 for advancing, in particular continuously, the handling devices 10 along the advancement direction F.

The driving devices 14 may comprise a plurality of driving motors 15, particularly of the electrical type, each of which is arranged for driving at least one flexible endless element including, for example, a chain 16 or a belt. The flexible endless elements support the handling devices 10 so that, when the driving motors 15 drive the corresponding flexible endless elements, the handling devices 10 are in turn advanced along the advancement direction F.

In the example shown in Figure 5, each driving motor 15 is configured to drive two chains 16. In particular, each driving motor 15 is configured to move the corresponding chains 16 parallelly to the advancement direction F. To this end, as shown in Figure 5, each driving motor 15 may be connected to a shaft 17 that is coupled to a pair of sprockets 18 on each of which a corresponding chain 16 is wound. One or more toothed wheels or intermediate sprockets may be interposed between the driving motor 15 and the respective sprockets 18, depending on their mutual position.

Each pair of chains 16 is in turn configured to advance along the advancement direction F at least one handling device 10. To this end, in the example shown, each pair of chains 16 supports at least one support element 13, which is fixed relative to the corresponding chains 16. Each support element 13 is configured to support the two gripping elements 11 of a handling device 10. Each support element 13 has an elongated shape and extends transversely, in particular perpendicularly, to the advancement direction F.

A movement device 20 is provided for moving the gripping elements 11 between the engagement configuration and the disengagement configuration. The movement device 20 may comprise a cam 21 fixed to a frame of the sequencing device 1. The cam 21 has two active surfaces 22, arranged at opposite sides of the cam 21 and extending mainly along the advancement direction F. Each active surface 22 is intended to control the gripping elements 11 located at the same side of a path of the containers C along the advancement direction F.

The active surfaces 22 may be symmetrical relative to the path of the containers C.

The movement device 20 further comprises a plurality of cam followers 23 associated with corresponding gripping elements 11 and arranged to interact with the cam 21. Each cam follower 23 may be conformed as a roller which is free to rotate around a respective axis, in particular a vertical axis.

Each cam follower 23 is connected to a corresponding gripping element 11. The cam follower 23 is intended to engage with the cam 21, particularly by rolling along the corresponding active surface 22, so as to control the position of the respective gripping element 11 transversely to the advancement direction F. The movement device 20 is thus capable of controlling when and how the gripping elements 11 reach the engagement configuration, as well as when and how the gripping elements 11 are moved to the disengagement configuration.

As shown in Figure 5, further cams 27 are provided upstream and downstream of the cam 21, in order to keep the gripping elements 11 in the disengagement configuration when the gripping elements 11 are inactive, i.e. are in a portion of their path in which they do not interact with the containers C.

As shown in Figure 5, to each support element 13 a pair of guiding members 19 is fixed. Each of these guiding members 19 slidably supports a respective gripping element 11. The guiding members 19 are suitable for guiding the corresponding gripping elements 11 as the latter move between the engagement and disengagement configuration.

Between each guiding member 19 and the corresponding gripping element 11, an elastic element (which is not shown) is interposed, the elastic element being for example conformed as a helix spring. The elastic element pushes each gripping element 11 away from the corresponding guiding member 19 and towards the other gripping element 11 of the handling device 10. The elastic element is housed in a telescopic enclosure 12, which may vary its length according to the degree of compression of the elastic element.

As shown in Figures 2 and 3, the chains 16 extend parallel to one another, and to the advancement direction F. A number of chains 16, particularly a half of the chains 16, is located at one side of the path of the containers C. The remaining chains 16 are located at the other side of the path of the containers C.

Each support element 13 connects a chain 16 located at one side of the path of the containers C with a further chain 16 located at the other side of such path.

The support elements 13 may have substantially the same length transversely to the advancement direction F. Hence, starting from a peripheral side of the sequencing portion 3, each support element 13 is connected to chains 16 located in correspondingly ordered position at the two sides of the path of the containers C. That is to say, when moving from the top to the bottom in the plan view of Figure 2, a support element 13 connects the first chain 16 located at one side of the path of the containers C with the first chain 16 located at the other side of said path. The adjacent support element 13 connects the second chain 16 located at one side of the path of the containers C with the second chain 16 located at the other side of said path, and so on.

In order to optimize the overall dimensions of the sequencing portion 3, a number of driving motors 15 are arranged at one side of path of the containers C, whereas the remaining motors 15 are arranged at the other side of such path, externally of the chains 16. The driving motors 15 are configured to drive at least a group of consecutive handling devices 10. This means that each handling device 10 may be driven by a respective driving motor 15, or that each driving motor 15 may drive two or more handling devices 10 which are arranged non-consecutively along the advancement direction F. In the latter case, between the handling devices 10 which are driven by the same driving motor 15, further handling devices 10 (driven by further driving motors 15) are interposed.

In the example shown, two groups of handling devices may be defined.

The first group comprises the handling devices 10 which, in Figures 1 to 4, are facing upwards. Each handling device 10 of this first group is driven by a distinct driving motor 15.

The second group comprises a plurality of handling devices 10' which, in the example shown in Figures 1 to 4, are not visible and are facing downwards. One of the handling devices 10' of the second group is shown in Figure 5.

In other words, in the example shown each driving motor 15 is configured to displace along the advancement direction F two distinct handling devices 10, 10', which are supported by respective support elements 13, 13' connected to a common pair of chains 16.

The components of the two handling devices 10, 10' are substantially the same and have been indicated by the same numerals in Figure 5.

Between two handling devices 10, 10' driven by the same driving motor 15, a plurality of further handling devices are interposed, which are driven by different driving motors 15.

In the example shown, when a container C is engaged by the handling device 10 of the first group which is driven by a preset driving motor 15, the handling device 10' of the second group driven by said preset driving motor 15 will not be handling any container C.

In general, if the total number of handling devices 10, 10' is N, then N/2 driving motors 15 can be used, so that each driving motor 15 moves two handling devices. The handling devices 10, 10' driven by a common driving motor 15 are not consecutive, so that they do not simultaneously handle containers C.

Thus, independent control of the position of distinct containers C which are simultaneously processed in the sequencing portion 3 is not jeopardized. At the same time, the number of driving motors 15 can be reduced. Figure 6 shows schematically the cam 21 in a plan view, with an indication of some significant events along a time axis t.

The sequencing apparatus 1 comprises a detecting element, for example a photocell, for detecting position of a front side of a container C in an outlet zone of the introductory portion 2, after the container C has been accelerated by the outlet module 8. The detecting element may particularly be positioned so as to read position of the front side of a container C at a control line L1 located in an end region of the outlet module 8, as shown in Figure 2.

By reading the position of the front side of the container C at the control line L1, a control unit arranged for controlling the sequencing apparatus 1 is capable of determining the actual position of the container C and comparing it with the theoretical position in which the container C should be located if the pitch between all the containers C were constant. The control unit can thus calculate a correction to be applied, if required, to the actual position of the container C in order that the latter may be arranged at a constant pitch relative to the preceding container. The position of the container C at the control line L1 is read at a time instant t1.

At an instant t2, which follows the instant t1, the position - along the advancement direction F - of the handling device 10 intended to engage with the container C starts to be corrected. In particular, the control unit is so configured as to adjust position of the handling device 10 in such a way that the handling device 10 is centered relative to the container C when the handling device 10 engages with the container C. This is done by acting on the driving motor 15 which drives the handling device 10 at issue. Thus, it is ensured that each handling device 10 grips the corresponding container C in a well defined position of the container C.

When a handling device 10 reaches a centered position relative to the corresponding container C, the gripping elements 11 of the handling device 10 are still in the disengagement configuration.

At a subsequent instant t3, after the handling device 10 has been placed in a centered position relative to the container C, the cam followers 23 associated with the two gripping elements 11 of the handling device 10 at issue start to interact with the cam 21, particularly with respective converging sections 24 of the active surfaces 22. The elastic elements housed inside the telescopic enclosures 12 urge the corresponding gripping elements 11 towards the active surfaces 22. While the cam followers 23 move in contact with the converging sections 24, the corresponding gripping elements 11 move one towards another until they reach the engagement configuration. This occurs at the instant t4. The container C, at this point, is firmly grasped by the gripping elements 11, which can advance the container C along the advancement direction.

The cam followers 23 are now urged against two parallel sections 25 of the cam 21, which implies that the corresponding handling device 10 is still in the engagement configuration.

In a first time period between the instants t4 and t5, the control unit corrects the position of the handling device 10, by acting on the respective driving motor 15, so that the container C gripped by the handling device 10 is brought into a position which corresponds to a constant pitch relative to the preceding container C. Subsequently, between the instants t5 and t6, a gripping device of an apparatus located downstream of the sequencing apparatus 1, particularly a dividing apparatus, is brought into a position aligned with the handling device 10, along the advancement direction F. The container C is still gripped by the handling device 10.

After the instant t6, the gripping device of the downstream apparatus clamps the container C and, at the instant t7, the handling device 10 starts to disengage from the container C. This occurs while the cam followers 23 associated with the handling device 10 interact with corresponding diverging sections 26 of the cam 21. The elastic elements housed in the telescopic enclosures 12 are compressed and the gripping elements 11 are moved away from one another, thereby releasing the container C.

At instant t8, the handling device 10 has reached the disengagement configuration and the cam followers 23 cease to interact with the cam 21. The container C has already been delivered to the downstream apparatus.

By using different driving motors 15 to move consecutive handling devices 10 along the advancement direction F, the position of each handling device 10 may be controlled and corrected independently of position of the adjacent handling devices 10. The handling device 10 may thus be positioned at a constant pitch relative to the previous container C, whichever is its initial position.

In an embodiment, a sensor element may optionally be provided downstream of the introductory portion 2 and in an input zone of the sequencing portion 3. The sensor element is so configured as to read the position of each container C after the latter has been collected by a respective handling device 10.

The sensor element, which may be for example a photocell, is in particular arranged to read the position of a front side of a container C along a check line L2, shown in Figure 2.

The data read by the sensor element arranged along the check line L2 may be used to determine if a further correction is needed on position of the container C in order to guarantee a constant pitch, after a correction has already been performed by using data coming from the detecting element located at the control line L1. This further correction allows taking into consideration possible errors occurred between the control line L1 and the check line L2 and hence to further improve precision in position of the container C, particularly at high production rates.

Since the check line L2 is arranged at a short distance from the control line L1, the further correction, if any, should be nearly negligible.

If a significant further correction is needed, then something is not working properly in the sequencing apparatus 1 or upstream of the latter. For example, excessive wear on the belts 9 of the outlet module 8 might have occurred, with the consequence that the container C slides relative to the belts 9 while the container C is being advanced along the outlet module 8. Thus, replacement of the belts 9 may be required.

It may also happen that an error has occurred in setting certain working conditions, or that certain working conditions have voluntarily been changed without taking due account of the change, either in the sequencing apparatus 1 or upstream of the latter.

Thus, the data acquired by the sensor element located at the check line L2 may be used to monitor the sequencing apparatus 1, or even the whole packaging plant in which the sequencing apparatus 1 is integrated.

The containers C enter the sequencing apparatus 1 with a random pitch and speed, and leave the sequencing apparatus 1 with a constant pitch and in conditions of controlled speed. Thus, the machines located downstream of the sequencing apparatus 1 can successfully process the containers C, even if such machines need to receive precisely positioned containers C, as is the case of a dividing apparatus.

By advancing consecutive containers C by means of distinct driving devices 14, the position and possibly speed of each container C may be controlled independently of adjacent containers C. It is thus ensured that, when the handling devices 10 release the containers C, the latter are located at a substantially constant pitch, even if the advancement speed of the containers C is high and hence the packaging line works at high production rates.

The handling devices 10 comprising gripping elements 11 allow the containers C to be firmly gripped and avoid relative displacement or slippage between each container C and the corresponding handling device 10 while the latter is in the engagement configuration. The precision in positioning the containers C may thus be further increased.

## Claims

1. A sequencing apparatus for arranging a plurality of products (C) in a sequence, the sequencing apparatus (1) comprising:
- a plurality of handling devices (10, 10'), each handling device (10, 10') being operable between an engagement configuration, in which the handling device (10, 10') is engaged with a product (C), and a disengagement configuration, in which the handling device (10, 10') releases the product (C),
- a plurality of driving devices (14) for advancing the handling devices (10, 10') along an advancement direction (F),
wherein said plurality of handling devices (10, 10') comprises at least a group of consecutive handling devices (10) each of which is configured to be driven by a respective driving device (14) of said plurality, so that movement of a handling device (10) of said group along the advancement direction (F) can be controlled independently of movement of the other handling devices (10) of said group, in order to ensure that a preset pitch is defined between consecutive products (C) of said sequence.

2. A sequencing apparatus according to claim 1, and further comprising a detecting element for detecting position of a product (C) upstream of said plurality of handling devices (10, 10'), and a control unit for controlling position of the handling device (10, 10') intended to engage with said product (C) on the basis of the detected position of the product (C), by acting on the driving device (14) corresponding to said handling device (10).

3. A sequencing apparatus according to claim 2, wherein the control unit is configured to correct position of a handling device (10) before the handling device (10) interacts with the corresponding product (C), so that the handling device (10) is in contact with a predetermined zone of said product (C) in the engagement configuration.

4. A sequencing apparatus according to claim 3, wherein the control unit is configured to further correct position of a handling device (10) engaged with the corresponding product (P), so as to bring the handling device (10) engaged with the corresponding product (C) in a position corresponding to the preset pitch.

5. A sequencing apparatus according to any one of claims 2 to 4, and further comprising a sensor element located downstream of the detecting element for detecting position of a product (C) engaged with a handling device (10) and possibly correct position of said handling device (10) on the basis of the position of the product (C) detected by the sensor element.

6. A sequencing apparatus according to claim 5, wherein the control unit is configured to check data coming from the sensor element in order to detect possible working anomalies on the basis of a difference between the position of the product (C) detected by the sensor element and a theoretical position of the product (C).

7. A sequencing apparatus according to any preceding claim, wherein each driving device (14) comprises a driving motor (15) and at least one endless flexible element (16) arranged parallelly to the advancement direction (F) and configured to be driven by the corresponding driving motor (15), at least one support element (13) being connected to the at least one endless flexible element (16) for supporting a handling device (10).

8. A sequencing apparatus according to claim 7, wherein each driving motor (15) is configured to drive a pair of endless flexible elements (16) which are connected to one another by the at least one support element (13), the endless flexible elements (16) of said pair extending at opposite sides of a path of the products (C).

9. A sequencing apparatus according to any preceding claim, wherein each handling device (10, 10') comprises a pair of gripping elements (11) for gripping a product (P), the sequencing apparatus (1) further comprising a movement device (20) for moving the gripping elements (11) of said pair relative to one another between the engagement configuration and the disengagement configuration.

10. A sequencing apparatus according to claim 9, wherein the movement device (20) comprises a cam (21) fixed relative to a frame of the sequencing apparatus (1), the cam (21) having two active surfaces (22) each of which is intended to control a gripping element (11) of said pair.

11. A sequencing apparatus according to claim 10, and further comprising a cam follower (23) connected to each gripping element (11) and an elastic element for urging the cam follower (23) against one of the two active surfaces (22) of the cam (21).

12. A sequencing apparatus according to any preceding claim, wherein the at least a group of consecutive handling devices (10) each of which is configured to be driven by a respective driving device (14) is formed by one half of the handling devices (10, 10') of said plurality of handling devices (10, 10'), so that each driving device (14) drives two non-consecutive handling devices (10, 10') of said plurality of handling devices (10, 10').

13. A sequencing apparatus according to any preceding claim, and further comprising an introductory portion (2) arranged upstream of the plurality of handling devices (10, 10') for feeding the products (C) to the plurality of handling devices (10, 10'), the introductory portion (2) comprising an input module (6) for accumulating the products (C) by decreasing speed thereof and an output module (7) for spacing the products (C) by increasing speed thereof.

14. A sequencing apparatus according to claim 13, wherein the input module (6) and the output module (8) each comprises a pair of belts (9) having a respective branch running parallelly to the advancement direction (F) so as to engage with opposite side faces of the products (C), thereby advancing the products (C) along the advancement direction (F).

15. A plant comprising a sequencing apparatus (1) according to any preceding claim and a dividing apparatus for dividing the sequence of products (C) coming from the sequencing apparatus (1) into a plurality of parallel lanes.
